# EUROPEAN PATENT SPECIFICATION

(11) **EP 2 854 197 B1**
(45) Date of publication and mention of the grant of the patent: **02.01.2019**
(21) Application number: 13794032.6
(22) Date of filing: 17.05.2013
(51) Int. Cl.: H01M 2/14, H01M 2/16, H01M 10/42, H01M 10/052

(54) **LITHIUM-ION BATTERY SEPARATOR**
SEPARATOR FÜR LITHIUM-IONEN-BATTERIE
SÉPARATEUR DE BATTERIE AU LITHIUM-ION

(30) Priority: 23.05.2012 JP 2012117415; 03.04.2013 JP 2013077504
(43) Date of publication of application: 01.04.2015
(73) Proprietor: Mitsubishi Paper Mills Limited, Tokyo 130-0026 (JP)
(72) Inventor: MASUDA, Takao, Tokyo 130-0026 (JP); TAKAHAMA, Nobuko, Tokyo 130-0026 (JP); OCHIAI, Takahito, Tokyo 130-0026 (JP); KATO, Makoto, Tokyo 130-0026 (JP); KATO, Kazumi, Tokyo 130-0026 (JP); KASAI, Noriko, Tokyo 130-0026 (JP)
(74) Representative: Adam, Holger
(86) International application number: PCT/JP2013/064544
(87) International publication number: WO 2013/176276

(56) References cited:
- WO-A1-2007/066768
- JP-A- 2005 536 658
- JP-A- 2007 294 437
- JP-A- 2011 505 663
- US-A1- 2004 106 037
- US-A1- 2006 024 569
- US-A1- 2008 190 841
- R. Waterhouse ET AL: "Structure, Properties, and Performance of Inorganic-Filled Separators", The 29th International Battery Seminar & Exhibit, 1 March 2012 (2012-03-01), pages 1-30, XP055060648, Retrieved from the Internet: URL:? [retrieved on 2013-04-23]

## Description

### Technical Field

This invention relates to a lithium ion battery separator.

### Background Art

In a lithium ion battery (sometimes abbreviated as "battery" hereafter), a lithium ion battery separator (sometimes abbreviated as "separator" hereafter) is used for preventing the contact between electrode plates.

Porous film made of polyethylene or polypropylene which is conventionally used as a separator has low thermal resistance, and suffers from a serious safety problem. That is, in a battery using such porous film as a separator, when local heat generation inside the battery occurs due to an internal short circuit or the like, the separator shrinks around the heat-generated area, and the internal short circuit is further extended, which causes runaway heat generation, and serious incidents such as fire or explosion.

In order to solve such a problem, there has been proposed a separator having a coated layer formed by applying an inorganic pigment such as alumina to a non-woven fabric base material made of a thermally resistant base fiber such as polyethylene terephthalate (PET) or the like, and then drying the inorganic pigment-coated non-woven fabric base material (for example, see Patent Documents 1∼3). However, in such a separator, there has been a problem that a decomposition product of an electrochemical reaction generated by the coated layer being exposed to an electrical potential between electrodes, deteriorates a battery characteristics. Especially, an influence on the cycle characteristics is significant. Furthermore, PD4 discloses electrical separators for use in lithium high energy batteries, wherein the separators are formed by applying a suspension comprising an oxide of the metals Al, Zn and/or Si onto and into a substrate selected from polymeric fiber nonwovens less than 30 µm comprising polymeric fibers selected from polyacrylonitrile, polyester and/or polyolefins. Moreover, PD5 discloses a separator or membrane comprising a polymeric non-woven, such as a polyamide non-woven, comprising a ceramic coating comprising at least one oxide selected from Al₂O₃, TiO₂, ZrO₂, BaTiO₃, SiO₂ and mixtures thereof, on and in the polymeric non-woven. Among further prior art, R. Waterhouse et al., "Structure, Properties, and Performance of Inorganic-Filled Separators", The 29th International Battery Seminar & Exhibit, 2012, pp. 1-30 discloses an alumina-coated separator comprising an Al₂O₃ coating on both sides of a polyethylene (PE) non-woven substrate, which includes an Al₂O₃ layer, a PE+ Al₂O₃ layer, a PE only layer, a PE + Al₂O₃ layer and an Al₂O₃ layer in this order.

### PRIOR ART DOCUMENTS

### PATENT DOCUMENTS

[Patent Document 1] JP 2007-294437 A
[Patent Document 2] JP 2011-505663 A
[Patent Document 3] JP 2005-536658 A
[Patent Document 4] US 2006/024569 A1
[Patent Document 5] US 2008/190841 A1

### Summary of the Invention

### Problems to be Solved by the Invention

It is an object of the present invention to provide an improved lithium ion battery separator, especially a lithium ion battery separator that can increase the safety of a battery using this lithium ion battery separator, and that can make a cycle characteristics of the battery improved.

### Means to Solve the Problems

For achieving the above object, the present inventors have made diligent studies and have completed the following invention.
(1) A lithium ion battery separator formed by applying an inorganic pigment to a non-woven fabric base material, characterized in that a layer composed mainly of an inorganic pigment, a layer composed of a mixture of an inorganic pigment and a base fiber, and a layer composed mainly of a base fiber are overlaid in this order, as set forth in claim 1, wherein a thickness of the layer composed mainly of a base fiber is 2µm or more, and is 3 times or less a thickness of the layer composed of the mixture of an inorganic pigment and a base fiber,
(2) The lithium ion battery separator as recited in (1), wherein an existing ratio of an inorganic pigment in the layer composed of the mixture of an inorganic pigment and a base fiber decreases continuously or stepwise from the layer composed mainly of an inorganic pigment towards the layer composed mainly of a base fiber,
(3) The lithium ion battery separator as recited in any one of (1) or (2), wherein the ratio of the inorganic pigment in the layer composed of the mixture of the inorganic pigment and the base fiber, in a portion at depth of 1/4 from the layer, composed mainly of an inorganic pigment, is 1.5 times or more the ratio of the inorganic pigment in the layer composed of the mixture of the inorganic pigment and the base fiber, in a portion at depth of 3/4 from the layer composed mainly of an inorganic pigment.
(4) The lithium ion battery separator as recited in any one of (1) to (3), wherein a ratio of peak intensities of Al to C (Al/C ratio) based on an energy dispersive X-ray spectrometry on the surface of the separator is 20 or more on the surface of the layer composed mainly of an inorganic pigment, and is 0.1 or more and less than 1.0 on the surface of the layer composed mainly of a base fiber.

### Effect of the Invention

In the battery using a lithium ion battery separator of the present invention, the technical effects such as high safety and excellent cycle characteristics can be achieved.

### Brief Description of Drawings

Fig. 1 is a schematic drawing showing a cross-sectional structure of a lithium ion battery separator of the present invention.
Fig. 2 shows scanning electron microscope images of separator A in the present invention.
Fig. 3 shows scanning electron microscope images of separator E in the present invention.
Fig. 4 shows scanning electron microscope images of separator F which is out of the present invention.
Fig. 5 shows scanning electron microscope images and energy dispersive X-ray spectra of separator A in the present invention.
Fig. 6 shows scanning electron microscope images and energy dispersive X-ray spectra of separator F which is out of the present invention.

### Embodiments for Carrying Out the Invention

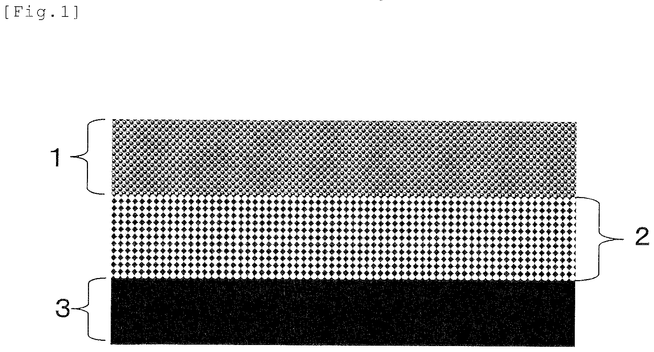

Fig. 1 is a schematic drawing showing a cross-sectional structure of a lithium ion battery separator of the present invention. The separator of the present invention is a lithium ion battery separator formed by applying an inorganic pigment to a non-woven fabric base material, wherein a layer 1 composed mainly of an inorganic pigment (sometimes abbreviated as a "pigment-main layer" hereafter), a layer 2 composed of a mixture of an inorganic pigment and a base fiber (sometimes abbreviated as a "mixture layer" hereafter), and a layer 3 composed mainly of a base fiber (sometimes abbreviated as a "fiber-main layer" hereafter) are overlaid in this order.

A separator of the present invention can be produced according to the following process. That is, a liquid comprising an inorganic pigment ("coating liquid", hereafter) is applied to the surface of a non-woven fabric base material, and the inorganic pigment-coated non-woven fabric base material is dried under the condition that at least a part of the coating liquid permeates inside the non-woven fabric base material. The area formed by drying the coating liquid is referred to as a "coated layer".

A non-woven fabric base material used in the present invention is not particularly limited. As a method of making a sheet from a base fiber, a spunbonding method, a melt blowing method, an electrospinning method, a wet-laid method and the like can be exemplified. Among these methods, the wet-laid method is preferable, since a thin and dense structured non-woven fabric base material can be produced. As a method of bonding base fibers, a chemical-bonding method, a thermal bonding method and the like can be exemplified. Among these methods, the thermal bonding method is preferable since a non-woven fabric base material having a smooth surface can be produced.

As a base fiber that forms a non-woven fabric base material in the present invention, there are exemplified various synthetic fibers including polyolefin such as polypropylene, polyethylene or the like, polyester such as polyethylene terephthalate, polyethylene isophthalate, polyethylene naphthalate or the like, acrylic polymer such as polyacrylonitrile or the like, and polyamide such as nylon 6, 6, nylon 6 or the like; various cellulose pulps including wood pulp, hemp pulp, cotton pulp or the like; and various cellulosic regenerated fibers including rayon, lyocell or the like. Among these, a non-woven fabric composed mainly of polyester or polypropylene is preferred due to high thermal resistance, low hygroscopicity or the like. The preferable fiber diameter of a fiber forming a non-woven fabric base material varies depending on the physical properties of a coating liquid used, but it is preferable in the range of 2 to 8 µm.

A coated layer in the present invention is composed of an inorganic pigment and a binder resin. As the inorganic pigment, alumina such as α-alumina, β- alumina, γ-alumina or the like; alumina hydrate such as boehmite or the like; magnesium oxide; calcium oxide or the like can be used. Among these, α-alumina or alumina hydrate is preferably used from the viewpoint of high stability to an electrolyte used in a lithium ion battery. As the binder resin, various synthetic resins including a styrene-butadiene resin, an acrylic ester resin, a methacrylic ester resin, a fluorine resin such as a polyvinylidene fluoride or the like can be used. It is preferable that an amount of the binder resin is 0.1 to 30 mass% to the inorganic pigment.

If required, a coating liquid may contain, in addition to said inorganic pigment and binder resin, various additives including various dispersants such as polyacrylic acid, carboxymethylcellulose sodium and the like; various thickeners such as hydroxyethylcellulose, carboxymethylcellulose sodium, polyethylene oxide and the like; various wetting agents; antiseptics; and defoamers; and the like.

In the case that a separator have no fiber-main layer, the characteristics of a battery is deteriorated. Especially, the cycle characteristics thereof is deteriorated. The cause of such deterioration is considered that without fiber-main layer, the coated layer is directly exposed to the electrical potential between electrodes, and as a result, a decomposition product is generated by an electrochemical reaction.

Meanwhile, in the separator of the present invention, a thickness of the fiber-main layer is 2µm or more, and at the same time, it is 3 times or less a thickness of the mixture layer. In the case that the thickness of the fiber-main layer is less than 2µm, the characteristics of a battery is slightly deteriorated as compared to the case that the thickness of the fiber-main layer is 2µm or more. Especially, the cycle characteristics thereof is slightly deteriorated. The cause of such deterioration is considered that the electrodes and the separator are complicatedly in contact with each other at the interface therebetween, and in the case that the thickness of the fiber-main layer is less than 2µm, a portion in which the electrodes are contacted with the mixture layer is formed, and a decomposition product is
generated by an electrochemical reaction.

On the other hand, also in the case that a thickness of the fiber-main layer is three times or more a thickness of the mixture layer, the characteristics of a battery is slightly deteriorated, especially, the cycle characteristics thereof is slightly deteriorated. It is considered that this is because a compression elasticity ratio of the fiber-main layer is considerably low as compared to that of the mixture layer, and an expansion of the electrodes at the time of charging cannot be restrained.

Further, in the separator of the present invention, it is preferable that an existing ratio of an inorganic pigment in the mixture layer decreases continuously or stepwise from the pigment-main layer towards the fiber-main layer. The cycle characteristics of the battery using the separator with such a structure becomes especially excellent. More preferably, the existing ratio of an inorganic pigment in the mixture layer in a portion at depth of 1/4 from the pigment-main layer is 1.5 times or more the existing ratio of an inorganic pigment in the mixture layer in a portion at depth of 3/4 from the pigment-main layer, whereby the separator can be obtained which gives particularly excellent cycle characteristics to the battery. It is estimated that this is because there is an action of reducing the cycle characteristics when the existing ratio of the inorganic pigment is too high in a portion of the mixture layer near the main layer.

Further, a "depth" in the present invention is explained. First, "depth"s in the pigment-main layer, the mixture layer, and the fiber-main layer is explained. In each layer, a "depth" represented by a "length" is a distance L1 in the opposite direction when the surface of each layer or the boundary interface between the adjacent layers is to be "depth 0 (zero)". In each layer, a "depth" represented by a "ratio" is a ratio (L1/L2) of the distance L1 to the whole thickness L2 of each layer.

Secondly, a "depth" in the separator or the non-woven fabric base material is explained. In the separator or the non-woven fabric base material, a "depth" represented by a "length" is a distance L3 in the opposite direction when one surface of the separator or the non-woven fabric base material is to be "depth 0 (zero)". In the separator or the non-woven fabric base material, a "depth" represented by a "ratio" is a ratio (L3/L4) of the distance L3 to the whole thickness L4 of the separator or the non-woven fabric base material.

In the present invention, a "pigment-main layer" is an area in which an existing ratio of an inorganic pigment is more than 4/1 when the cross-section of the separator is observed. A "fiber-main layer" is an area in which an existing ratio of an inorganic pigment is less than 1/4 when the cross section of the separator is observed. Further, a "mixture layer" is an area in which an existing ratio of an inorganic pigment is 1/4 or more and 4/1 or less when the cross section of the separator is observed.

An "existing ratio of the inorganic pigment" in the present invention is a volume ratio of an inorganic pigment/a base fiber. It can be calculated as "a length of a portion identified with an inorganic pigment"/ "a length of a portion identified with a base fiber" by linerly scanning a constant depth of the section of the separator with a scanning electron microscope ("SEM" hereafter). In the case that an inorganic pigment or a base paper contains a specific element which the other does not contain, or an element which the both contain in greatly different existing ratios, materials can be identified based on energy dispersive X-ray spectrometry ("EDS" hereafter).

In the separator of the present invention, a ratio of peak intensities of Al to C (Al/C ratio) based on energy dispersive X-ray spectrometry on the surface of the separator is preferably 20 or more on the surface of the inorganic pigment-main layer, and is preferably 0.1 or more and less than 1.0 on the surface of the fiber-main layer.

Energy dispersive X-ray spectrometry ("EDS") is a method for the elemental analysis, wherein a characteristic X-ray specific to an atom emitted when an electron beam is irradiated on a sample surface is detected by an energy dispersive type detector, and then an element composing the sample surface and the density thereof are measured from the energy and intensity of the X ray. As an analyzer used for the energy dispersive X-ray spectrometry, Field Emission Scanning Electron Microscope (JEOL Ltd., JSM-06700F) or the like is exemplified. In the present invention, a ratio of peak intensities of Al to C (Al/C ratio) based on energy dispersive X-ray spectrometry is calculated as an average value of ratios of characteristic X-ray peak intensities (counted numbers of characteristic X-ray) derived from Al and C in the three measuring points at 10kV acceleration voltage and at 40X magnification with JSM-06700F.

In the present invention, elements composing a base fiber are mainly carbon (C) and oxygen (O), and elements composing a coated layer are mainly aluminum (Al) and oxygen (O). In the present invention, an Al/C ratio of 20 or more on the surface of the inorganic pigment-main layer shows a state in which a base fiber is little exposed and is covered with an inorganic pigment. By preventing the exposure of the base fiber, an internal short circuit can be restrained. By increasing the Al/C ratio, it can become possible to restrain a micro internal short circuit due to a lithium dendrite generated from the negative electrode at the time of initial charging. The Al/C ratio of 30 or more is more preferable, since the micro short circuit is less likely to occur at the time of charging at 4.3V voltage or more.

On the other hand, an Al/C ratio of 0.1 or more and less than 1.0 on the surface of the fiber-main layer shows that most of the surface is formed of a base fiber, but an inorganic pigment is existing on a part of the surface. In the case that there is no fiber-main layer or in the case that the Al/C ratio on the surface of the fiber-main layer is 1.0 or more, the characteristics of the battery become slightly deteriorated. Especially, the cycle characteristics thereof become deteriorated. It is considered that this is because the coated layer is directly exposed to an electrical potential between electrodes, and as a result, a decomposition product is generated by an electrochemical reaction. On the other hand, also in the case that the Al/C ratio on the surface of the fiber-main layer is less than 0.1, the characteristics of the battery become slightly deteriorated. It is considered that this is because a part of the coated layer oozes out very slightly and is exposed, and the conductivity of lithium ion become improved.

In order to produce a separator, in which a pigment-main layer, a mixture layer, and a fiber-main layer is overlaid in this order, a depth of penetration of a coating liquid should be adjusted. Further, by adjusting the depth of penetration of a coating liquid, a thickness of the pigment-main fiber, an existing ratio of an inorganic pigment in the mixture layer, and an Al/C ratio on the surface of the separator can be adjusted. In the present invention, it is preferable that the depth of penetration of a coating liquid is 1/4 or more the thickness of the non-woven fabric base material and it is ("the thickness of the non-woven fabric base material" minus 2) µm or less.

As a method of adjusting a depth of penetration of a coating liquid, the followings are exemplified. The first method is a method of adjusting a base fiber forming a non-woven fabric base material. In this method, in order to make thin the depth of penetration of a coating liquid, an amount ratio of a fine fiber should be high. In order to make thick the depth of penetration of a coating liquid, an amount ratio of a fine fiber should be low. Further, the depth of penetration thereof can be adjusted by controlling an amount of an oiling agent sticking to the surface of the base fiber or by controlling an amount of a surfactant such as a dispersant, a defoamer and the like in the case of forming a non-woven fabric base material by a wet-laid method. For example, in order to make thin the depth of penetration, the amount of an oiling agent or dispersant sticking to a base fiber should be small. In the present invention, it is preferable that an amount of an oiling agent or the like sticking to the base fiber is 0.01 ∼ 1 mass %.

The second method is a method of adjusting a viscosity (a high sheer viscosity, a low shear viscosity) of a coating liquid. In this method, in order to make thin the depth of penetration of a coating liquid, a viscosity of a coating liquid should be hightened. In order to make thick the depth of penetration of a coating liquid, a viscosity of a coating liquid should be lowered. As a method of adjusting a viscosity of a coating liquid, there are exemplified a method of controlling a solid content concentration of a coating liquid, a method of adding a thickener, a method of controlling an addition amount of the thickener, a method of controlling a temperature of a coating liquid or the like. In the present invention, a B-type viscosity of a coating liquid is preferably in the range of 10 to 10000 mPa·s, and more preferably in the range of 200 to 2000 mPa·s. The separator of the present invention can be easily produced by adjusting the B-type viscosity of a coating liquid within this range.

The third method is a method of adjusting a surface tension of a coating liquid. In this method, in order to make thin the depth of penetration of a coating liquid, the surface tension of a coating liquid should be hightened. In order to make thick the depth of penetration of a coating liquid, the surface tension of a coating liquid should be lowered. As a method of adjusting the surface tension of a coating liquid, there are exemplified a method of adding a wetting agent, a method of adjusting an addition amount of a wetting agent, a method of controlling a temperature of a coating liquid and the like. In the present invention, in the case that a coating liquid is water-based, the surface tension thereof is preferably in the range of 30 to 70 mN/m, more preferably in the range of 45 to 65 mN/m. The separator of the present invention can be easily produced by adjusting the surface tension of a water-based coating liquid within this range.

The fourth method is a method of selecting a coating procedure. In this method, in order to make thin the depth of penetration of a coating liquid, there is used a coating procedure in which a dynamic pressure in the direction of pressing a coating liquid into a non-woven fabric base material acts with difficulty. In order to make thick the depth of penetration of a coating liquid, there is used a coating procedure in which a dynamic pressure in the direction of pressing a coating liquid into a non-woven fabric base material acts easily. As a coating procedure in which a dynamic pressure in the direction of pressing a coating liquid into a non-woven fabric base material acts with difficulty, die-coating and curtain-coating are exemplified. As a coating procedure in which a dynamic pressure in the direction of pressing a coating liquid into a non-woven fabric base material acts easily, impregnation coating, blade-coating, rod-coating and the like are exemplified. As a coating procedure which has the intermediate feature between the two procedures, gravure coating is exemplified. In the present invention, a kiss reverse type gravure coating procedure is preferably used for the reason that the depth of penetration of a coating liquid can be easily adjusted. Especially, a small diameter-gravure of 150 mm or less in diameter of gravure is more preferably used.

By combining these methods appropriately, the depth of penetration of a coating liquid can be adjusted, and it becomes possible that the depth of penetration of a coating liquid is 1/4 or more a thickness of a non-woven fabric base material, and it is (the thickness of a non-woven fabric base material minus 2) µm or less. Further, by adjusting the depth of penetration of a coating liquid so that a part of a coating liquid oozes out at the back side of a coated surface, Al/C ratios of the front and back surfaces can be adjusted.

### EXAMPLE

This invention will be explained by reference to the following examples. In these examples, "%" and "part" are all based on mass, unless otherwise noted. Further, a coating amount is a coating amount based on absolute dry weight.

### Production of non-woven fabric base material 1

A uniform slurry for paper-making having a concentration of 1 mass % was prepared by dispersing into water with a pulper 40 mass parts of an oriented crystallized polyethylene terephthalate (PET) type short-fiber of 0.06 dtex in fineness (an average fiber diameter 2.4um) and 3mm in fiber length; 20 mass parts of an oriented crystallized PET type short-fiber of 0.1 dtex in fineness (an average fiber diameter 3.0um) and 3mm in fiber length; and 40 mass parts of a single component PET-type short-fiber for binder (softening point 120 °C and melting point 230 °C) . The obtained slurry for paper-making was made paper in a wet-laid method with an inclined type paper making machine equipped with a paper making wire having an air permeability of 275cm³/cm²/sec and an organization of upper wire: plain weave, lower wire: rib weave, to which a PET-type short-fiber for binder was bonded with a cylinder dryer at 135 °C for developing a strength of the non-woven fabric, to obtain a non-woven fabric of 12 g/m² in weight. Further, the obtained non-woven fabric was subjected to heat calendering treatment with a 1 nip-type heat calender composed of an induction heating jacket roll (heat roll made of metal) and an elastic roll, under the conditions of 200 ° C in heat roll temperature, 100 kN/m in liner pressure, and 30m/minute in treatment speed to produce the non-woven fabric base material 1 having a thickness of 18µm.

### Production of non-woven fabric base material 2

A non-woven fabric base material 2 having a thickness of 14 µm was produced in the same manner as in the non-woven fabric base material 1 except that the liner pressure and the treatment speed in the heat calendering treatment were replaced by 200 kN/m and 10m/minute, respectively. The non-woven fabric base material 2 is difficult to penetrate a coating liquid thereinto as compared to the non-woven fabric base material 1, since fibers bond more firmly with each other on the surface thereof.

### Production of coating liquid 1

100 parts of boehmite having a volume average particle diameter of 2.3 µm and a specific surface area of 3m²/g was mixed and fully stirred with 120 parts of an aqueous solution of 0.3 mass % of carboxymethyl cellulose sodium salt having a viscosity of 1 mass% water solution at 25 °C of 200mPa·s. Next, the obtained solution was mixed with 300 parts of an aqueous solution of 0.5 mass % of carboxymethyl cellulose sodium salt having a viscosity of 1 mass% water solution at 25 °C of 7000mPa· s, and 10 parts of a carboxy-modified styrene butadiene resin (SBR) emulsion (solid content concentration 50 mass%) having a glass transition point of 5°C and a volume average particle diameter of 0.2µm, and the resulting mixture was stirred to produce the coating liquid 1. The B-Type viscosity of the coating liquid 1 is 1020 mPa·s.

### Production of coating liquid 2

The coating liquid 2 was produced in the same manner as in the coating liquid 1 except that the amount of an aqueous solution of 0.5 mass % of carboxymethyl cellulose sodium salt having a viscosity of 1 mass% water solution at 25 °C of 7000mPa· s was changed from 300 parts to 100 parts. The B-Type viscosity of the coating liquid 2 is 210 mPa·s. The coating liquid 2 is easier to penetrate into a non-woven fabric base material, since the coating liquid 2 has a lower viscosity than the coating liquid 1.

### Production of separator A

The coating liquid 1 was applied to the non-woven fabric base material 1 with a kiss reverse-type gravure coater so that the absolutely dried coating amount became 6g/m², followed by drying to produce the separator A having a thickness of 36µm.

### Production of separator B

The coating liquid 1 was applied to the non-woven fabric base material 1 with a kiss reverse-type gravure coater so that the absolutely dried coating amount became 8g/m², followed by drying. Then, the coating liquid 1 was again applied to the same coated surface of the non-woven fabric base material 1 with a kiss reverse-type gravure coater, so that the absolutely dried coating amount became 8g/m2, followed by drying to produce the separator B having a thickness of 35µm.

### Production of separator C

The coating liquid 2 was applied to the release surface of a process paper with a kiss reverse-type gravure coater so that the absolutely dried coating amount became 16g/m², and then the non-woven fabric base material 1 was slightly stuck to the coated surface before dried, followed by drying and releasing and removing the process paper to produce the separator C having a thickness of 35µm.

### Production of separator D

The separator D having a thickness of 35 um was produced in the same manner as in the separator A except for using the non-woven fabric base material 2 instead of the non-woven fabric base material 1.

### Production of separator E

The separator E having a thickness of 39µm was produced in the same manner as in separator C except for using the coating liquid 1 instead of the coating liquid 2.

### Production of separator F

The separator F having a thickness of 32µm was produced in the same manner as in the separator A except for using an impregnation-type coater instead of a kiss reverse-type gravure coater.

### Production of separator G

The separator G having a thickness of 33µm was produced in the same manner as in the separator B except that the second time coating is conducted to the surface of the non-woven fabric base material opposite to the surface coated in the first time coating.

### Production of separator H

The separator H having a thickness of 34µm was produced in the same manner as in the separator A except for using the coating liquid 2 instead of the coating liquid 1.

### Production of separator I

The separator I having a thickness of 30µm was produced in the same manner as in the separator A except for using the coating liquid 2 instead of the coating liquid 1, and using an impregnation-type coater instead of a kiss reverse-type gravure coater.

<Evaluation>

### [Thickness]

The section of each separator was observed with an EDS-installed SEM (Field Emission Scanning Electron Microscope (JEOL Ltd., JSM-06700F)). In the observation, an "area where aluminum (Al) was detected" was regarded as a "boehmite as an inorganic pigment". An "area where aluminum (Al) was not detected but the substance thereof was present" was regarded as a "polyethylene terephthalate fiber as a base material fiber". A "depth at which an existing ratio of an inorganic pigment was 4/1" was regarded as a "boundary interface between the pigment-main layer and the mixture layer". A "depth at which an existing ratio of an inorganic pigment was 1/4" was regarded as a "boundary interface between the mixture layer and the fiber-main layer".

From these "boundary interfaces", the thickness of each of the "pigment-main layer", "mixture layer" and "fiber-main layer" was measured (I, II and III) . In the case that "the mixture layer reaches the opposite surface of the pigment-main layer", the thickness of the "fiber-main layer" was regarded as "0(xero)". The results were shown in Table 1.

### [Gradation ratio]

A ratio(X/Y) of an "existing ratio X of an inorganic pigment in a portion at depth of 1/4 of the mixture layer" to an "existing ratio Y of an inorganic pigment in a portion at depth of 3/4 of the mixture layer" was indicated as a "gradation ratio" in Table 1. The separator E has too thin a thickness of the "mixture layer" to measure the gradation ratio.

### [Al/C ratio]

A ratio of peak intensities of Al to C (Al/C ratio) based on energy dispersive X-ray spectrometry on back and front surfaces in each separator was calculated as an average value of ratios of characteristic X-ray peak intensities (counted numbers of characteristic X-ray) derived from Al and C in the three measuring points at 10kV acceleration voltage and at 40X magnification with a Field Emission Scanning Electron Microscope (JEOL Ltd., JSM-06700F).

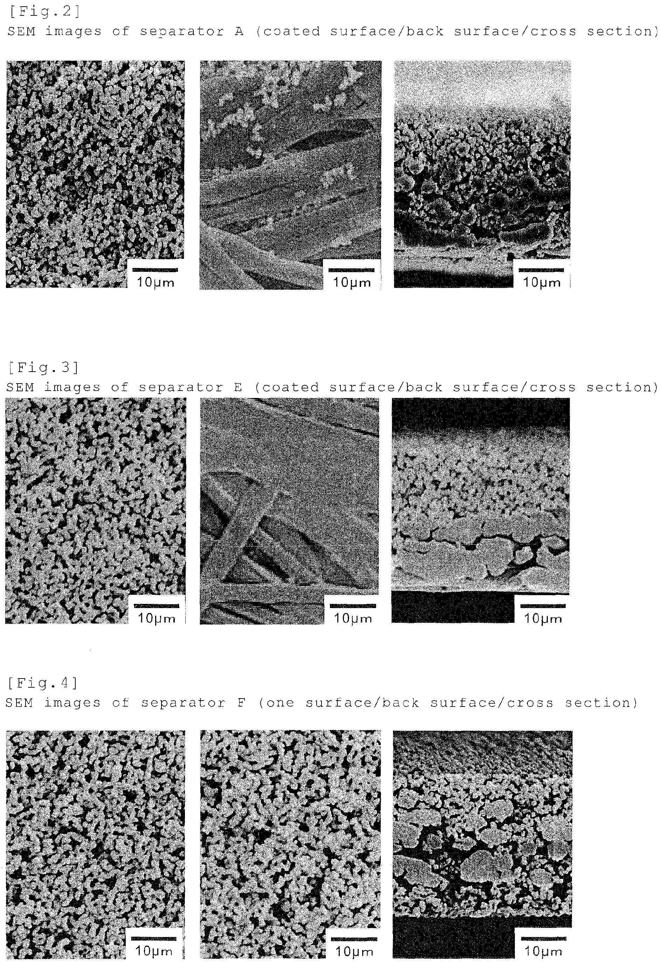

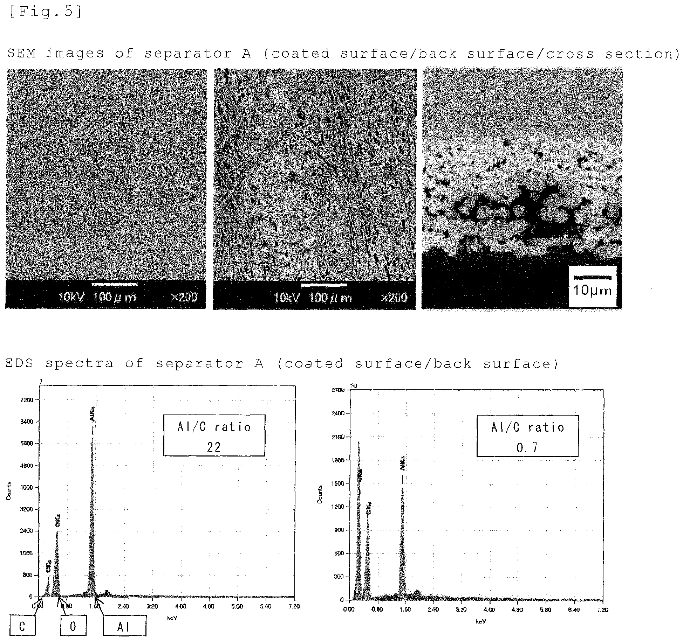

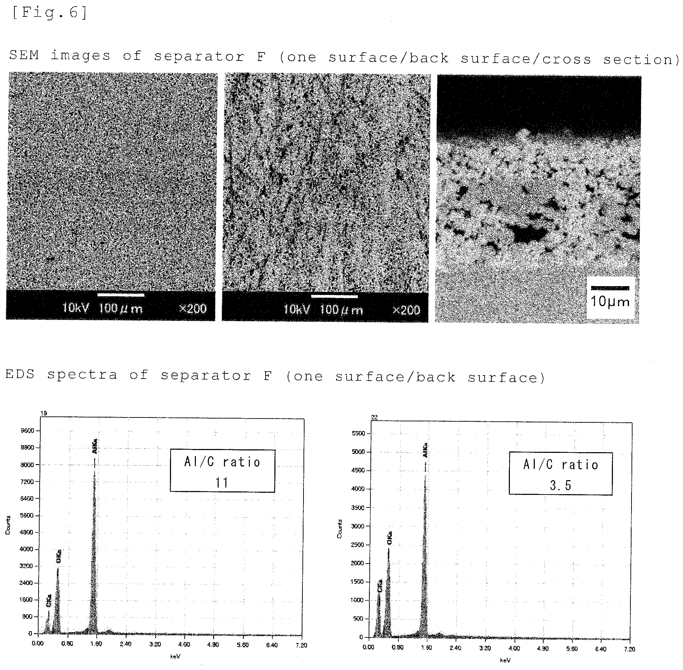

Fig.2, Fig.3 and Fig.4 show SEM images of the coating liquid-applied surfaces (the coated surfaces), the surfaces opposite to said coated surfaces (the back surfaces), and the cross sections of the separators A, E and F, respectively. Fig. 5 and Fig.6 show SEM images of the coated surfaces, the back surfaces and the cross sections of the separators A and F as well as energy dispersive X-ray spectra of the separators A and F, respectively.

### [Characteristics of battery during repeated charging and discharging]

Using each separator, there was produced a laminate-type lithium ion secondary battery having a designed capacity of 100 mAh, wherein a positive electrode-active material is lithium manganate; a negative electrode-active material is artificial graphite; and an electrolytic solution consists of a solvent: a mixed solvent of ethylene carbonate and diethyl carbonate in a volume ratio of 7/3 and an electrolyte: lithium hexafluorophosphate (1mol/L). In assembling the battery, the pigment-main layer of the separator was positioned so as to face the negative electrode.

Then, in each battery produced, charging and discharging of 200 cycles was conducted under the sequence of "constant electric current charging of 200mA → constant electric voltage charging of 4.2v (1 hour) → constant electric current discharging of 200mA → toward next cycle on reaching 2.8v", and a capacity lowering rate at 100^{th} cycle was calculated as [1 minus (a capacity of discharging at 100^{th} cycle/ a capacity of discharging at 4^{th} cycle)] multiplied by 100(%). Further, a capacity lowering rate at 200^{th} cycle was calculated as [1 minus (a capacity of discharging at 200^{th} cycle/ a capacity of discharging at 4^{th} cycle)] multiplied by 100(%). Smaller capacity lowering rate means more excellent cycle characteristics of a battery. The results are shown in Table 1.

⊚: capacity lowering rate being less than 10%
○ capacity lowering rate being 10% or more and less than 20%
Δ : capacity lowering rate being 20% or more and less than 30%
× : capacity lowering rate being 30% or more

### [Table 1]

**[Table 1]**

| Separator | Non-woven fabric base material | Coating liquid | Pigment-main layer thickness (I) | Mixture layer thickness (II) | Fiber-main layer thickness (III) | (III)/(II) | Gradation ratio | Capacity lowering rate at 100th cycle | Al/C ratio on surface of pigment-main layer | Al/C ratio on surface of fiber-main layer | Capacity lowering rate at 200th cycle | |
|---|---|---|---|---|---|---|---|---|---|---|---|---|
| A | 1 | 1 | 18µm | 14µm | 4µm | 0.3 | 1.8 | ⊚ | 22 | 0.7 | ⊚ | Present invention |
| B | 1 | 1 | 17µm | 16µm | 2µm | 0.1 | 2.0 | ⊚ | 52 | 0.3 | ⊚ | Present invention |
| C | 1 | 2 | 17µm | 5µm | 13µm | 2.6 | 1.4 | ○ | 26 | 0.2 | ○ | Present invention |
| D | 2 | 1 | 21µm | 3µm | 11µm | 3.7 | 1.2 | Δ | 60 | 0.1 | Δ | Present invention |
| E | 2 | 1 | 25µm | 1µm | 13µm | 13.0 | - | Δ | 75 | 0.0 | × | Present inven tion |
| F | 1 | 1 | 14µm | 18µm | 0µm | 0.0 | - | × | 11 | 3.5 | × | Out of present invention |
| G | 1 | 1 | 15µm | 18µm | 0µm | 0.0 | - | × | 30 | 22 | × | Out of present invention |
| H | 1 | 2 | 16µm | 18µm | 0µm | 0.0 | - | × | 16 | 1.2 | × | Out of present invention |
| I | 1 | 2 | 12µm | 18µm | 0µm | 0.0 | - | × | 10 | 5.5 | × | Out of present invention |

As is apparent from the results shown in Table 1, the lithium ion battery separators A∼E wherein the pigment-main layer, the mixture-layer and the fiber-main layer are overlaid in this order, could achieve the effects that they have smaller capacity lowering rates during the repeated charging and discharging and more excellent cycle characteristics than the lithium ion battery separators F∼I wherein the fiber-main layer is not present.

The separators A∼C having the thickness of the fiber-main layer (III) being 2µm or more and three times or less the thickness of the mixture layer (II) of a pigment and a fiber, had especially small capacity lowering rates during the repeated charging and discharging, and had especially excellent cycle characteristics. In contrast thereto, the separators D∼E having the thickness of the fiber-main layer (III) exceeding three times the thickness of the mixture layer(II) of an inorganic pigment and a fiber, had slightly deteriorated cycle characteristics as compared to the separators A∼C.

The separators F∼I having the thickness of the fiber-main layer (III) being 0µm without fiber-main layer had the deteriorated cycle characteristics.

From the comparison of the separators A∼D, the separators A and B having a gradation ratio being 1.5 times or more could achieve the effects that the capacity lowering rate during the repeated charging and discharging was extremely small, and the cycle characteristics was extremely good.

Further, from the comparison of the separators A∼E, the separators A∼D having a ratio of peak intensities of Al to C (Al/C ratio) based on energy dispersive X-ray spectrometry being 20 or more on the surface of the inorganic pigment-main layer, and being 0.1 or more and less than 1.0 on the surface of the fiber-main layer, could achieve the effects that they have the small capacity lowering rates during the repeated charging and discharging at 200^{th} cycle, and the excellent cycle characteristics.

### Industrial Utility

As examples of utilization of the present invention, a separator for lithium ion secondary battery and a separator for lithium polymer ion secondary battery are preferable.

### Description of Reference Numbers in Drawings

- 1: Layer composed mainly of an inorganic pigment (inorganic pigment-main layer)
- 2: Layer composed of a mixture of an inorganic pigment and a base fiber (mixture layer)
- 3: Layer composed mainly of a base fiber (fiber-main layer)

## Claims

1. A lithium ion battery separator formed by applying an inorganic pigment to a non-woven fabric base material, wherein a pigment layer (1) composed mainly of an inorganic pigment, a mixture layer (2) composed of a mixture of an inorganic pigment and a base fiber, and a fiber-main layer (3) composed mainly of a base fiber are overlaid in this order,
**characterized in that**
by observing a section of the separator with a scanning electron microscope (SEM) having an energy dispersive X-ray spectrometry (EDS), a depth at which an existing ratio of an inorganic pigment is 4/1 is regarded as a boundary interface between the pigment layer (1) and the mixture layer (2), and a depth at which an existing ratio of an inorganic pigment is 1/4 is regarded as a boundary interface between the mixture layer (2) and the fiber-main layer (3), and
a thickness of the fiber-main layer (3) composed mainly of a base fiber is 2µm or more, and is 3 times or less a thickness of the mixture layer (2) composed of the mixture of an inorganic pigment and a base fiber.

2. The lithium ion battery separator as recited in claim 1, wherein an existing ratio of an inorganic pigment in the mixture layer (2) composed of the mixture of an inorganic pigment and a base fiber decreases continuously or stepwise from the pigment layer (1) composed mainly of an inorganic pigment towards the fiber-main layer (3) composed mainly of a base fiber.

3. The lithium ion battery separator as recited in claim 1 or 2, wherein the ratio of an inorganic pigment
in the mixture layer (2) composed of the mixture of an inorganic pigment and a base fiber,
in a portion at depth of 1/4 from the pigment layer (1), composed mainly of an inorganic pigment,
is 1.5 times or more the ratio of the inorganic pigment in the mixture layer (2) composed of the mixture of an inorganic pigment and a base fiber,
in a portion at depth of 3/4 from the pigment layer (1) composed mainly of an inorganic pigment.

4. The lithium ion battery separator as recited in any one of claims 1 to 3, wherein a ratio of peak intensities of Al to C (Al/C ratio) based on an energy dispersive X-ray spectrometry on the surface of the separator is 20 or more on the surface of the pigment layer (1) composed mainly of an inorganic pigment, and is 0.1 or more and less than 1.0 on the surface of the fiber-main layer (3) composed mainly of a base fiber.

## Patentansprüche

1. Lithiumionenbatterie-Separator, der durch Auftragen eines anorganischen Pigments auf ein Vliesstoff-Grundmaterial gebildet ist, wobei eine Pigmentschicht (1), die hauptsächlich aus einem anorganischen Pigment besteht, eine Mischungsschicht (2), die aus einer Mischung eines anorganischen Pigments und einer Grundfaser besteht, und eine Faserhauptschicht (3), die hauptsächlich aus einer Grundfaser besteht, in dieser Reihenfolge übereinander angeordnet sind,
**dadurch gekennzeichnet, dass**
durch Betrachten eines Schnittes des Separators mit einem Rasterelektronenmikroskop (scanning electron microscope, SEM), das eine energiedispersive Röntgenspektroskopie (EDS) hat, eine Tiefe, bei der ein existierendes Verhältnis eines anorganischen Pigments 4/1 ist, als eine Fasergrenzfläche zwischen der Pigmentschicht (1) und der Mischungsschicht (2) angesehen wird und eine Tiefe, bei welcher ein existierendes Verhältnis eines anorganischen Pigments 1/4 ist, als Fasergrenzfläche zwischen der Mischungsschicht (2) und der Faserhauptschicht (3) angesehen wird, und
die Dicke der Faserhauptschicht (3), die hauptsächlich aus einer Grundfaser besteht, 2 µm oder mehr ist und das 3-fache oder weniger der Dicke der Mischungsschicht (2), die aus der Mischung eines anorganischen Pigmentes und einer Grundfaser besteht, ist.

2. Lithiumionenbatterie-Separator gemäß Anspruch 1, wobei ein existierendes Verhältnis eines anorganischen Pigmentes in der Mischungsschicht (2), die aus der Mischung eines anorganischen Pigmentes und einer Grundfaser besteht, kontinuierlich oder schrittweise von der Pigmentschicht (1), die hauptsächlich aus einem anorganischen Pigment besteht, zu der Faserhauptschicht (3), die hauptsächlich aus einer Grundfaser besteht, abnimmt.

3. Lithiumionenbatterie-Separator gemäß Anspruch 1 oder 2, wobei das Verhältnis eines anorganischen Pigmentes in der Mischungsschicht (2), die aus der Mischung eines anorganischen Pigments und einer Grundfaser besteht, in einem Teil in einer Tiefe von 1/4 ab der Pigmentschicht (1), die hauptsächlich aus einem anorganischen Pigment besteht, das 1,5-fache oder mehr des Verhältnisses des anorganischen Pigments in der Mischungsschicht (2), die aus der Mischung eines anorganischen Pigments und einer Grundfaser besteht, ist,
in einem Teil in einer Tiefe von 3/4 ab der Pigmentschicht (1), die hauptsächlich aus einem anorganischen Pigment besteht.

4. Lithiumionenbatterie-Separator gemäß einem der Ansprüche 1 bis 3, wobei das Verhältnis von Peakintensitäten von Al zu C (Al/C-Verhältnis) auf der Basis einer energiedispersiven Röntgenstrahlspektrometrie an der Oberfläche des Separators, 20 oder mehr an der Oberfläche der Pigmentschicht (1), die hauptsächlich aus einem anorganischen Pigment besteht, ist, und 0,1 oder mehr und weniger als 1,0 an der Oberfläche der Faserhauptschicht (3), die hauptsächlich aus einer Grundfaser besteht, ist.

## Revendications

1. Séparateur de batterie au lithium-ion formé en appliquant un pigment inorganique sur un matériau de base en tissu non-tissé,
dans lequel une couche de pigment (1) composée principalement d'un pigment inorganique, une couche de mélange (2) composée d'un mélange d'un pigment inorganique et d'une fibre de base, et une couche principale en fibres composée principalement d'une fibre de base sont superposées dans cet ordre,
**caractérisé en ce que**,
en observant une section du séparateur par un microscope électronique à balayage (MEB) couplé à spectrométrie à rayons X à dispersion d'énergie, une profondeur, à laquelle un rapport existant d'un pigment inorganique est 4/1, est considérée comme un interface de délimitation entre la couche de pigment (1) et la couche de mélange (2), et une profondeur, à laquelle un rapport existant d'un pigment inorganique est 1/4, est considérée comme un interface de délimitation entre la couche de mélange (2) et la couche principale en fibres (3), et une épaisseur de la couche principale en fibres (3) composée principalement d'une fibre de base est de 2 µm ou plus et correspond à 3 fois ou moins une épaisseur de la couche de mélange (2) composée du mélange d'un pigment inorganique et d'une fibre de base.

2. Séparateur de batterie au lithium-ion selon la revendication 1, dans lequel un rapport existant d'un pigment inorganique dans la couche de mélange (2) composée du mélange d'un pigment inorganique et d'une fibre de base diminue de façon continue ou par étapes à partir de la couche (1) composée principalement d'un pigment inorganique vers la couche principale en fibres (3) composée principalement d'une fibre de base.

3. Séparateur de batterie au lithium-ion selon la revendication 1 ou 2, dans lequel le rapport d'un pigment inorganique dans la couche de mélange (2) composée du mélange d'un pigment inorganique et d'une fibre de base dans une partie, située à une profondeur de 1/4 à partir de la couche de pigment (1) composée principalement d'un pigment inorganique, représente au moins 1,5 fois le rapport du pigment inorganique dans la couche de mélange (2) composée du mélange d'un pigment et d'une fibre de base dans une partie, située à une profondeur de 3/4 à partir de la couche de pigment (1) composée principalement d'un pigment inorganique.

4. Séparateur de batterie au lithium-ion selon l'une quelconque des revendications 1 à 3, dans lequel le rapport des intensités des pics d'Al à C (rapport Al/C), basé sur une analyse du séparateur, est égal à 20 ou plus à la surface de la couche de pigment (1) composée principalement d'un pigment inorganique et est égal à 0,1 ou plus et moins de 1,0 à la surface de la couche principale en fibres composée principalement d'une fibre de base.
